# EUROPEAN PATENT APPLICATION

(11) **EP 1 633 062 A1**
(43) Date of publication of application: **08.03.2006**
(21) Application number: 05255355.9
(22) Date of filing: 01.09.2005
(51) Int. Cl.: H04B 10/155, H04B 10/18

(54) **Modulation with low cross-talk in optical transmission**

(30) Priority: 03.09.2004 US 934147
(71) Applicant: LUCENT TECHNOLOGIES INC., Murray Hill, New Jersey 07974-0636 (US)
(72) Inventor: Essiambre, Rene-Jean, Red Bank, NJ 07701 (US)
(74) Representative: Sarup, David Alexander

(57) **Abstract**

An apparatus includes a multi-channel optical transmitter and an all-optical transmission line. The multi-channel optical transmitter is configured to produce optical data streams having double-sideband formats in each of a series of channels. The all-optical transmission line has a sequence of spans of transmission optical fiber and one or more sequences of optical bandpass filters and is configured to receive from the optical transmitter optical data pulses in the series of channels. One of the sequences of optical bandpass filters is configured to pass one of the sidebands and to block the other of the sidebands of the optical data stream in an associated one of the channels and is also configured to block one of the channels adjacent to the associated one of the channels.

## Description

### BACKGROUND

### Field of the Invention

The invention relates generally to fiber-optic data transmission methods and systems.

### Discussion of the Related Art

In dense wavelength division multiplexed (DWDM) optical transmission lines, different wavelength or frequency channels transmit independent data. For that reason, the capacity to transmit data is related to how closely channels are spaced. One measure of this capacity is the spectral efficiency, SE, of the optical transmission line. The SE is defined as SE =B/Δν where B is the bit rate in bits per second (bit/s) and Δν is the frequency spacing between adjacent channels in Hertz (Hz). In DWDM optical transmission systems, various techniques have been used to increase spectral efficiencies and the associated capacities to transmit data.

Contemporary DWDM systems offer high values of the spectral efficiency. For example, commercially available DWDM systems have optical transmission rates, B, of 10 giga-bits per second (Gb/s) and channel separations Δν of 50 giga Hertz (GHz). Thus, these commercially available DWDM systems provide spectral efficiencies of about 0.2 bits per second per Hertz (bit/s/Hz). Next-generation DWDM optical transmission systems target transmission rates of about 40 Gb/s and a channel spacing of about 50 GHz and thus, target spectral efficiencies of about 0.8 bit/s/Hz. This spectral efficiency is about four times the spectral efficiencies in the commercially available DWDM optical transmission systems. While a variety of techniques have significantly improved DWDM systems further improvements are desirable in systems having high spectral efficiencies.

### BRIEF SUMMARY

In one aspect, the invention features an apparatus that includes a multi-channel optical transmitter and an all-optical transmission line. The multi-channel optical transmitter is configured to produce optical data streams having double-sideband formats in each of a series of channels. The all-optical transmission line has a sequence of spans of transmission optical fiber and one or more sequences of optical bandpass filters and is configured to receive from the optical transmitter optical data pulses in the series of channels. One of the sequences of optical bandpass filters is configured to pass one of the sidebands and to block the other of the sidebands of the optical data stream in an associated one of the channels and is also configured to block one of the channels adjacent to the associated one of the channels.

In another aspect, the invention features a method for optically transmitting data. The method includes producing an optical data stream having a vestigial sideband format in each of a series of adjacent channels. The method includes transmitting the optical data streams through a fiber-optic transmission line. The transmitting includes passing each optical data stream through an associated sequence of optical bandpass filters. The optical bandpass filters of each sequence are configured to pass the data stream of the associated channel and to block the optical data stream of a channel adjacent to the channel of the associated optical data stream.

### BRIEF DESCRIPTION OF THE DRAWINGS

Figure 1 shows an embodiment of an optical transmission system that implements a vestigial sideband (VSB) format for data modulation;
Figure 2A shows an exemplary in-line lumped optical device from the all-optical transmission line of Figure 1;
Figure 2B illustrates an exemplary optical add/drop multiplexer (OADM) or optical cross connect (OXC) of the all-optical transmission line of Figure 1;
Figure 2C shows an exemplary multi-channel optical transmitter for the optical transmission system of Figure 1;
Figure 3A illustrates a power spectrum, i.e., in dB, of an optical data stream in a non-return-to-zero (NRZ) - on/off-keyed (OOK) format;
Figure 3B illustrates the power spectrum, i.e., in dB, after conversion of the NRZ-OOK optical data stream of Figure 3A to a VSB format;
Figure 3C illustrates a power spectrum, i.e., in dB, of an optical data stream in a carrier-suppressed return-to-zero (CSRZ) - OOK format;

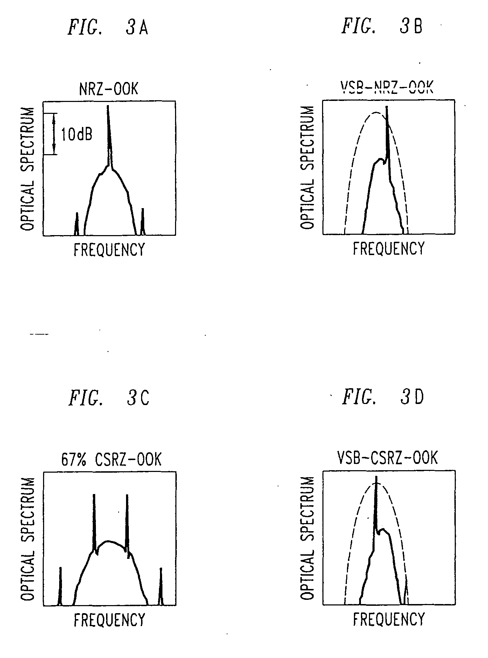

Figure 3B illustrates the power spectrum, i.e., in dB, after conversion of the CSRZ-OOK optical data stream of Figure 3C to a VSB format;

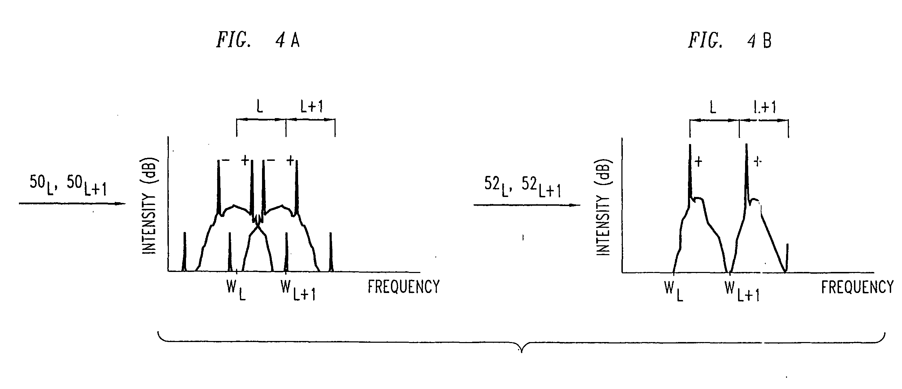

Figure 4 provides views that superimpose optical power spectra in adjacent single-channel optical transmitters of Figure 2C;

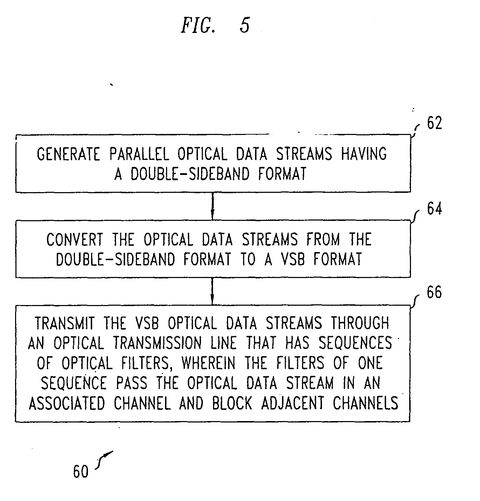

Figure 5 is a flow chart illustrating a method of transmitting data over a multi-channel fiber-optic transmission system;

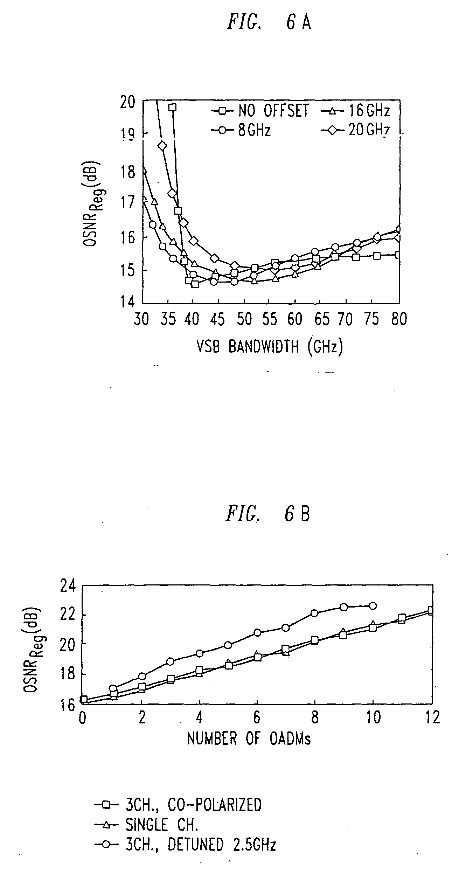

Figure 6A plots OSNR_{req} values in n transmission systems with a VSB-CSRZ-like format as a function the transmitter filter's bandpass and offset; and
Figure 6B plots OSNR_{req} values in an optical transmission systems with a VSB-CSRZ format as a function of the number of equivalent OADMs or OXCs traversed by the VSB-CSRZ optical pulses.

In the Figures and text, like reference numerals indicate elements with similar functions.

The illustrative embodiments are described more fully by the Figures and detailed description. The inventions may, however, be embodied in various forms and are not limited to embodiments described in the Figures and detailed description.

### DETAILED DESCRIPTION OF ILLUSTRATIVE EMBODIMENTS

In next-generation DWDM fiber-optic transmission lines, it will be desirable to have cascades of optical add/drop multiplexers (OADMs) and/or optical cross connects (OXCs) to support agile routing of optical signals. Unfortunately, the cascades of OADMs and/or OXCs will cause strong optical filtering of optical pulses when spectral efficiencies are high. Such strong filtering can become a primary source of degradation of the optical pulses and of inter-channel cross talk in systems with high spectral efficiencies. The pulse degradation and inter-channel cross talk can be reduced through an appropriate selection of the format for data modulation. In particular, converting a data stream from a double-sideband format to a vestigial-sideband (VSB) format typically reduces inter-channel cross talk and lessens pulse degradation in the face of strong optical filtering.

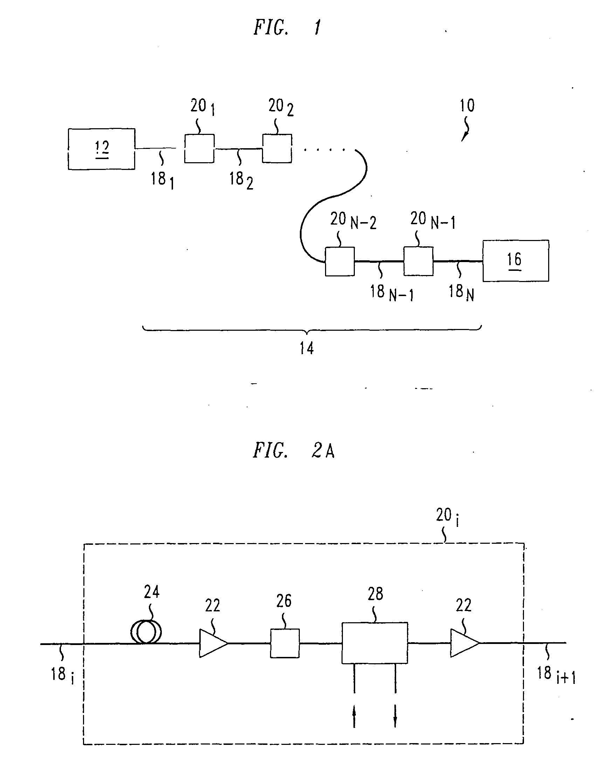

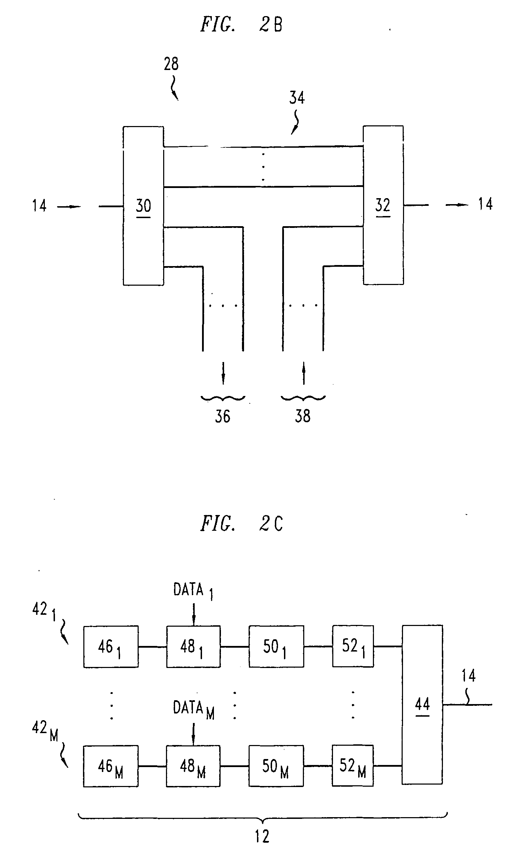

Figure 1 shows a DWDM optical transmission system 10 that implements such a conversion of the format for data modulation. The optical transmission system 10 includes an optical transmitter 12, an all-optical transmission line 14, and an optical receiver 16. The optical transmitter 12 transmits optical pulses to the all-optical transmission line 14. The all-optical transmission line 14 transmits the optical pulses from the optical transmitter 12 to the optical receiver 16. The all-optical transmission line 14 includes a sequence of spans of transmission optical fiber 18₁, 18₂ ... 18_{N-1}, 18_{N}, e.g., standard single mode fibers (SSMFs), and in-line lumped optical devices 20₁, 20₂ ... 20_{N-2}, 20_{N-1}. The in-line lumped optical devices 20₁ ... 20_{N-1} optically couple adjacent spans of the transmission optical fibers 18₁ ... 18_{N}.

The optical transmitter 12 and receiver 14 are multi-channel devices. Thus, the optical transmitter 12 produces parallel streams of optical pulses in a sequence of adjacent DWDM wavelength channels. Similarly, the optical receiver 16 receives some or all of the parallel streams of optical pulses from the all-optical transmission line 14 and extracts one or more independent streams of digital data from the received parallel streams.

The all-optical transmission line 14 is configured to carry optical data streams with arbitrary polarizations on wavelength channels therein. In particular, the transmission SSMFs 18₁ ... 18_{N} are typically not polarization maintaining optical fibers. Also, some of in-line lumped optical devices 20₁ ... 20_{N-1} include an optical add/drop multiplexer (OADM) or optical cross connect (OXC) that is not configured to maintain channel polarizations. The OADM or OXC may, e.g., add optical data streams whose polarizations do not have preselected relations with non-dropped and non- added optical data streams on adjacent channels of the all-optical transmission line 14. Indeed, the added optical data streams may be substantially non-orthogonal polarized to the non-dropped and non-added optical data streams. For example, the polarizations of the added channels may be aligned to within about 45 degrees to the polarizations of non-dropped or added optical data streams in adjacent channels.

Figure 2A shows an in-line lumped optical device 20ᵢ that connects adjacent spans of transmission SSMF 20ᵢ, 20ᵢ₊₁. The in-line lumped optical device 20ᵢ includes optical amplifiers 22, a dispersion compensator 24, and an optical filter 26. The optical amplifiers 22 may be erbium doped fiber amplifiers (EDFAs), Raman optical amplifiers (not shown), and/or combinations of both. The dispersion compensator 24 may include lengths of dispersion compensating fiber (DCF) selected to produce full span compensation or to produce any other desired dispersion map for the optical transmission line 14. The optical filter 26 removes amplified spontaneous emission noise that is produced by in-line optical amplifiers 22.

Some of the in-line optical devices 20ᵢ include an OADM and/or an OXC 28 as shown in Figure 2B. Each OADM/OXC 28 includes a wavelength demultiplexer (DEMUX) 30, a wavelength multiplexer (MUX) 32, and optical fibers 34, 36, 38. The optical fibers 34 transfer optical pulses of selected channels between the optical DEMUX 30 and MUX 32. The optical fibers 36 drop optical data streams in selected channels from the all-optical transmission line 14. The optical fibers 38 add optical data streams in selected channels to the all-optical transmission line 14. The optical DEMUX 30 separates the optical pulses of adjacent channels into different optical fibers 34, 36. Similarly, the optical MUX 32 combines the optical pulses of adjacent wavelength channels from fibers 34, 38. The separating and combining of the optical data streams for adjacent channels involves strong filtering of individual wavelength channels, e.g., via deinterleaving/interleaving of odd and even channels. Thus, the in-line OADMs and/or OXCs 28 also function as in-line optical bandpass filters that strongly filter optical pulses in each wavelength channel.

The OADMs/OXCs 28 are not typically configured to preserve polarizations. For example, the optical fibers 34, 36, 38 are typically SSMFs rather than special polarization-maintaining optical fibers. Similarly, the optical DEMUX 30 does not typically output only selected polarizations at individual output ports. In particular, the DEMUX 30 is not configured to transmit light with relatively orthogonal polarizations at the output ports for adjacent channels. Similarly, the optical MUX 32 does not typically attenuate selected polarization components at individual input ports. For the above-reasons, the OADMs/OXCs 28 do not typically provide guaranteed polarization relationships between optical pulses of adjacent wavelength channels. Relative polarizations are typically not maintained between original optical pulses in adjacent channels and are typically not maintained between original optical pulses and added optical pulses in adjacent channels. Due to the absence of polarization-maintaining and strongly polarization-sensitive elements, the OADMs/OXCs 28 may add optical data streams that are substantially non-orthogonal to non-dropped and non-added optical data streams of adjacent wavelength channels. Indeed, in the all-optical transmission line 14, the added and non-added optical data streams of two adjacent channels may have polarizations that are more parallel than not.

Figure 2C shows one embodiment of the multi-channel optical transmitter 12 of Figure 1. The multi-channel optical transmitter 12 includes a parallel set of single-channel optical transmitters 42₁ ... 42_{M} and an Mx1 optical wavelength MUX 44 that connects the single-channel optical transmitters 42₁ ... 42_{M} to a first end of the all-optical transmission line 14. Each single-channel optical transmitter 42₁ ...42M transmits an independent optical data stream for one wavelength channel of the DWDM. The Mx1 optical wavelength MUX 44 combines the optical data streams from the single-channel optical transmitter 42₁ ...42_{M} and typically does not block selected polarizations thereof. Also, streams of optical data pulses from the single-channel optical transmitters 42₁ ...42_{M} for adjacent channels do not typically have orthogonal polarizations. For those reasons, the Mx1 optical wavelength MUX 44 does not typically transmit optical data streams to adjacent wavelength channels of the all-optical transmission line 14 with relatively orthogonal polarizations.

In the multi-channel optical transmitter 12, each single-channel optical transmitter 42₁ ... 42_{M} includes a laser 46₁ ... 46_{M}, a first optical modulator 48₁ ... 48_{M}, a second optical modulator 50₁ ... 50_{M}, and an optical bandpass filter 52₁ ... 52_{M}. The lasers 46₁ ... 46_{M} are narrow-band continuous wave (CW) sources for light of a single DWDM channel, e.g., distributed feedback-lasers. The optical modulators 48₁ ... 48_{M} and 50₁ ... 50_{M} e.g., may be Mach-Zehnder interferometers that enable amplitude modulation of light. Each first optical modulator 48₁ ... 48_{M} modulates the CW carrier from the associated laser 46₁ ... 46_{M} responsive to an input data stream to produce a double-sideband optical data stream, e.g., a non-return-to-zero on/off keyed data stream. The second optical modulators 50₁ ... 50_{M} modulates the received data stream with a regular constant frequency signal whose frequency is half of the data's bit rate thereby converting the optical data stream to a carrier-suppressed return-to-zero (CSRZ) - on/off-keyed (OOK) format. Thus, each second optical modulator 50₁ ... 50_{M} outputs a separate data stream of optical pulses modulated having a CSRZ-OOK format. Each optical filter 52₁ ... 52_{M} bandpass filters the stream of optical pulses from an associated second optical modulator 50₁ ... 50_{M}.

In each single-channel optical transmitter 42₁ ... 42_{M}, the optical bandpass filter 52₁ ... 52_{M} has two functions. First, the optical bandpass filter 52₁ ... 52_{M} blocks or strongly attenuates light in channels adjacent to the wavelength channel of the associated single-channel optical transmitter 42₁ ... 42_{M}. This reduces subsequent cross-talk between the independent optical data streams of adjacent single-channel optical transmitters 42₁ ... 42_{M} in the optical transmission line 14. Second, each optical bandpass filter 52₁ ... 52_{M} has a center wavelength, which is offset with respect to the center wavelength of the optical double-sideband data stream from the optical modulators 48₁ ... 48_{M} and 50₁ ... 50_{M} of the same channel. Due to the offset, each optical bandpass filter 52₁ ... 52_{M} converts a CSRZ data stream into a data stream having a VSB format.

In some deployed DWDM systems, conversion from a double-sideband format to a VSB format may be very simple to implement by shifting the wavelengths of transmitter light sources. Such conversions would not involve deploying new spans of transmission optical fiber. Thus, the conversions could enable inexpensively increasing transmission capacities of deployed optical transmission lines, which are presently configured for double-sideband formats.

Figures 3A ― 3D show power spectra for two double-sideband and VSB formats, e.g., implementable in embodiments of multi-channel optical transmitter 12 of Figures 1. Herein, a double-sideband format produces an optical power spectrum in which two sidebands are symmetrically distributed about a center frequency. One sideband corresponds to the part of the spectra above the center frequency, and the other sideband corresponds to the part of the spectrum below the center frequency. Each sideband of an optical data stream that is modulated in a double-sideband format carries all the data being transmitted by the optical data stream. A VSB data stream is produced by removing or strongly attenuating one sideband of a double-sideband optical data stream. For that reason, the VSB optical data stream effectively carries the same amount of data as the original double-sideband optical data stream. In the final VSB optical data stream, preferably 10 % or less of the optical power is in the strongly attenuated optical sideband and more preferably 1% or less of the optical power is in that sideband. Then, interference with the strongly attenuated sideband will not cause a substantial number of errors in data transmission.

Figures 3B and 3D show the power spectra of data streams in the VSB - non-return-to-zero (NRZ) - on/off-keyed (OOK) format and the CSRZ - OOK format, respectively. Filtering the NRZ-OOK data stream of Figure 3A with an optical bandpass filter, whose frequency response is given by the dashed curve, produces the VSB-NRZ-OOK spectrum of Figure 3B. Filtering the CSRZ-OOK data stream of Figure 3C with an optical bandpass filter, whose frequency response is given by the dashed curve, produces the VSB-CSRZ-OOK spectrum of Figure 3D. In both cases, the optical bandpass filters have center frequencies offset with respect to the center frequencies of the incident double-sideband optical data streams. The offsets and filter responses are selected to substantially remove one sideband of the received double-sideband data stream.

In Figure 4, plates A and B qualitatively illustrate the evolution of the power spectrum in two adjacent DWDM wavelength channels L, L+1 of the multi-channel optical transmitter 12 of Figure 2C. For illustrative purposes, the power spectra of channels L and L+1 have been superimposed over each other in plates A and B even though they would be in different single-channel optical transmitters 42_{L} and 42_{L+1}.

Plate A illustrates the output power spectra from the optical modulators 50_{L} and 50_{L+1} for the channels L and L+1. Each optical modulator 50_{L}, 50_{L+1} produces a CSRZ-type power spectrum with two high-power peaks, i.e., "+" and "-". The two peaks are symmetrically distributed about the center wavelength W_{L}, W_{L+1} of the associated channel L, L+1, i.e., power spectra of exemplary double-sideband formats. As shown, the optical modulators 50_{L} and 50_{L+1} produce power spectra that strongly overlap in frequency.

Plate B illustrates the output power spectra from the optical bandpass filters 52_{L} and 52_{L+1} for the channels L and L+1. Each optical bandpass filter 52_{L}, 52_{L+1} blocks or strongly attenuates one sideband of the associated double-sideband spectrum, because of the offset between the filter's center frequency of the center frequency and of the associated input CSRZ power spectrum. This offset of center frequencies or equivalently of center wavelengths causes the conversion between the CSRZ and VSB-CSRZ formats. The bandpass filters 52_{L}, 52_{L+1} strongly attenuate the "-" peaks, e.g., by at least 10 dB and more preferably at least 13 dB more than for the "+" peaks of the same channel. Thus, the optical bandpass filters 52_{L}, 52_{L+1.}lower the overlap in frequency and the inter-channel crosstalk during transmission when the two channels L, L+1 are combined.

Referring again to Figures 1 and 2A ― 2C, the all-optical transmission line 14 would includes sequences of in-line optical bandpass filters, e.g., associated with the in-line OADMs and/or OXCs 28. The shape of the in-line optical bandpass filters varies with channel number, because the OADMs/OXCs effectively route optical pulses of different channels through different in-line optical bandpass filters. For example, the OADMs and OXCs typically have optical interleavers and deinterleavers that cause bandpass filtering to separate light in adjacent channels. In particular, the optical pulses in adjacent channels pass through different ports of the optical interleavers and deinterleavers thereby undergoing different optical bandpass filtering.

In some embodiments, optical transmission line 14 is able to transport double-sideband data streams with the same channel spacing as the VSB data streams produced by the multi-channel optical transmitter 12. In such embodiments, the in-line optical bandpass filters typically have response functions that are frequency-aligned to the response functions of the transmitter's optical bandpass filters 52₁ ... 52_{M}. For that reason, each in-line optical bandpass filter would be configured to pass a first sideband and to block the second sideband of the double-sideband optical carrier for the associated channel, i.e., even though the first sideband would already be blocked by one of the optical bandpass filters 52₁ ... 52_{M}. That is, center wavelengths of the in-line optical bandpass filters and the optical bandpass filters 52₁ ... 52_{M} are similarly shifted with respect to the center wavelengths of the associated double-sideband data streams produced by individual ones of the optical modulators 50₁ ... 50_{M}. Exemplary center frequencies of the in-line optical bandpass filters and the double-sideband optical carriers in the same channel are relatively shifted by at least 20% of the bit rate (e.g., in giga-Hertz) and are preferably shifted by between 40% - 60 % of the bit rate for a channel spacing of 100 GHz or less or 50 GHz or less.

Converting from a data stream from a double-sideband format to a VSB format can reduce both inter-channel cross-talk and degradation of optical pulses due to strong optical filtering. A qualitative understanding of the origins of these improvements is obtained by comparing plates A and B of Figure 4. As shown in plate A, the channel spacing is so close that "-" high power peaks of one CSRZ double-sideband optical data stream would actually be into adjacent channels. For that reason, inter-channel cross-talk will be lowered after conversion of the double-sideband data streams to a VSB format, which, e.g., strongly attenuates the "-" peaks. Similarly, high power portions of the double-sideband data stream of plate A are more concentrated at frequencies where optical filters of the OADMs/OXCs 28 are configured to strongly attenuate for the double-sideband formats than for the converted optical data streams in the VSB formats of plate B. Thus, the sequence of OADMs/OXCs of the all-optical transmission line 14 should produce substantially less distortion of VSB optical data streams than of double-sideband optical data streams having equal channel spacings.

Figure 5 illustrates a method 60 for transmitting data over a fiber-optic transmission system, e.g., optical transmission system 10 of Figures 1 ― 2C.

The method 60 includes generating parallel optical data streams having a double-sideband format (step 62). The parallel optical data streams are associated with a series of adjacent wavelength channels. For example, optical modulators 48₁ ... 48_{M} and 50₁ ... 50_{M} of Figure 2C can generate such optical data streams in the exemplary CSRZ-OOK format.

The method 50 also includes converting the optical data streams from the double-sideband format to a VSB format (step 64). The converting may, e.g., involve passing each double-sideband optical data stream through an optical bandpass filter, wherein the filter is configured to pass one sideband and block the other sideband. Preferably, such filtering attenuates one sideband by at least 10 dB more than the other sideband and more preferably attenuates the one sideband by at least 20 dB more than the other sideband. For example, optical bandpass filters 52₁, ... 52_{M} of Figure 2C perform such conversions of the format via such filtering.

The method 60 also includes transmitting the optical data streams in the VSB format through a fiber-optic transmission line, e.g., all-optical transmission line 14. (step 66). The step of transmitting includes passing each optical data stream through an associated sequence of optical bandpass filters. The optical bandpass filters of a sequence pass the optical data stream of the associated channel and block optical data streams in channels adjacent to the associated channel. The optical bandpass filters of the associated sequence typically are also able to pass one sideband while blocking the other sideband of the associated double-sideband optical data stream. The optical bandpass filters may, e.g., be OADMs/OXCs 28 as in Figures 1 - 2B.

The step of transmitting also typically includes transmitting the VSB optical data streams of adjacent channels in polarization states that are not substantially orthogonal. The polarizations of said optical data streams of adjacent channels may even be substantially parallel. Also, the fiber-optic transmission line may not be polarization maintaining and/or may include OADMs and/or OXCs that add optical data streams whose polarizations are not substantially orthogonal to those of other optical data streams, which are already on adjacent channels of the fiber-optic transmission line.

In some embodiments, the fiber-optic transmission line can transmit optical data streams in both the double-sideband format and VSB formats. Nevertheless, transmission in the VSB format typically has a much higher spectral efficiency. Transmitting via the VSB format may enable obtaining a spectral efficiency that is 50% times higher than the maximum spectral efficiency of the same fiber-optic transmission line when transmitting in the double-sideband format. Transmission in the VSB format may even enable obtaining a spectral efficiency that is 2 ― 4 or more times the maximum spectral efficiency obtainable when transmitting in the double-sideband format.

Figures 6A and 6B show performance measurements in a setup simulating an optical transmission system where data was modulated according to the VSB-CSRZ format. The plotted performance measurements are optical signal-to-noise ratios (OSNR_{req}) required to obtain bit error rates of 10⁻³ or less. For Figures 6A and 6B, the performance measurements were obtained via an optical transmitter and an optical receiver, which both coupled to a recirculating loop setup.

The optical transmitter provided VSB-CSRZ optical pulses on three adjacent channels. The optical pulses were obtained by producing CSRZ optical pulses with 67% duty cycles and data rates of 42.7 Gb/s. This data rate effectively produced an information rate of 40 Gb/s when forward error correction is added. The CSRZ optical pulses passed through a third-order super-Gaussian optical filter with a 3dB bandwidth of between 30 GHz and 80 GHz. The offset between the center frequency of the transmitter's filter and the center frequency of the CSRZ optical pulses was also varied between 0 and 20 GHz.

The recirculating loop included an optical filter for limiting the growth of amplified spontaneous emission (ASE) light, EDFA optical amplifiers, a span of transmission SSMF, a DCF, and a back-to-back deinterleaver/interleaver pair. The length of DCF was matched to the 10 kilometer span of SSMF so as to produce full dispersion compensation. The interleavers/deinterleavers pairs were standard third-order Gaussian filters for 10 Gb/s transmission systems and had 3 dB and 20 dB bandwidths of 44 GHz and 62 GHz, respectively. The interleaver/deinterleaver pairs caused strong optical filtering.

The optical receiver used a VSB-type input filter. Designs and applications for receiver optical filters whose bandwidths vary with the bit rate are, e.g., described in US Patent publication 2004/0146297, which is incorporated herein by reference in its entirety.

Figure 6A shows OSNR_{req} values as a function of the width of the filter response of the transmitter's optical filters, e.g., optical bandpass filters 52₁, ... 52_{M} of Figures 2C. On the solid lines, the square, circle, triangle, and diamond data points correspond respectively to relative shifts of 0 GHz, 8 GHz, 16 GHz, and 20 GHz between the center frequency of the original CSRZ power spectrum and the center frequency of the optical bandpass filter that converted the optical pulses to the VSB-CSRZ format. In particular, for no offset, which corresponds to outputting strongly filtered CSRZ optical pulses, the measured OSNR_{req} values increased dramatically when the optical filter had a 3 dB bandwidth of less than about 38 GHz. As the offset was increased, the OSNR_{req} values increased much more gradually for 3 dB filter widths below about 38 GHz. This indicated that the strong attenuation of one peak in the CSRZ power spectrum, i.e., to make VSB-CSRZ optical pulses, significantly lowered inter-channel cross talk and/or the pulse distortion that is caused by strong optical filtering.

Figure 6B shows values of the OSNR_{req} as a function of number of OADMs traversed by the VSB-CSRZ optical pulses. The triangular, square, and circular data points show measured data for one channel, three adjacent co-polarized channels, and three adjacent channels detuned by 2.5 GHz. The triangular data points show that OSNR_{req} values increased only gradually with the number of OADMs traversed. Thus, strong optical filtering only gradually degraded the VSB-CSRZ optical pulses. The closeness of the square and triangular data points indicate that inter-channel cross-talk is very small. The circular data points indicate that the improvement obtained by using the VSB-CSRZ format is rather robust against small detunings of DWDM channels.

Figures 6A ― 6B suggests that conventional transmission systems that operate at 10 Gb/s in the CSRZ format can probably be operated at 40 Gb/s if frequencies of single-channel optical transmitters are detuned with respect to the optical bandpass filters used to limit inter-channel cross-talk. In particular, these conversions would probably do not require changes to the optical transmission lines themselves.

Long-haul embodiments of the optical transmission system 10 of Figures 1, 2A, 2B, and 2C may operate in the pseudo-linear transmission regime, use managed dispersion mapping, and/or incorporate an in-line optical phase conjugator to reduce undesired nonlinear optical effects on optical pulses. The pseudo-linear transmission regime is, e.g., described in U.S. Patent No. 6,542,678. Exemplary dispersion maps for managed dispersion mapping are, e.g., described in U.S. Patent 6,583,907; U.S. Patent 6,606,176; and U.S. Patent application 10/729,153, filed Dec. 5, 2003 by R.-J. Essiambre et al. In-line optical phase conjugators are, e.g., described in U.S. Patent Application Nos. 10/152,645, filed May 21, 2003, by R.-J. Essiambre et al, and 10/835,753, filed April 30, 2004, by Aref Chowdhury et al. These U.S. patents and U.S. patent applications are incorporated herein by reference in their entirety.

From the disclosure, drawings, and claims, other embodiments of the invention will be apparent to those skilled in the art.

## Claims

1. An apparatus, comprising:
a multi-channel optical transmitter being configured to produce optical data streams having double-sideband formats in each of a series of channels; and
an all-optical transmission line having a sequence of spans of transmission optical fiber and one or more sequences of optical bandpass filters and being configured to receive from the optical transmitter optical data pulses in the series of channels; and
wherein one of the sequences of optical bandpass filters is configured to pass one of the sidebands and to block the other of the sidebands of the optical data stream in an associated one of the channels and is configured to block one of the channels adjacent to the associated one of the channels.

2. The apparatus of the claim 1, wherein, another of the sequences of optical bandpass filters is configured to pass-one of the sidebands and to block the other of the sidebands of the optical data stream in another one of the channels and is configured to block one of the channels adjacent to the another of the channels.

3. The apparatus of claim 1, wherein the optical transmitter is configured to convert the optical data streams to a vestigial sideband format and to transmit the converted optical data streams to the all-optical transmission line.

4. The apparatus of claim 3, wherein the all-optical transmission line is able to transmit the converted optical data streams with substantially arbitrary polarizations in adjacent ones of the channels.

5. The apparatus of claim 1, wherein for each channel, the optical transmitter comprises an associated optical bandpass filter configured to pass one sideband and to block the other sideband of the optical data stream of the associated channel and to block one or more of the channels adjacent the associated channel.

6. A method for optically transmitting data, comprising:
in each of a series of adjacent channels, producing an optical data stream having a vestigial sideband format; and
transmitting the optical data streams through a fiber-optic transmission line; and
wherein the transmitting includes passing each optical data stream through an associated sequence of optical bandpass filters, the optical bandpass filters of each sequence being configured to pass the data stream of the associated channel and to block one of the optical data streams of a channel adjacent to the channel of the associated optical data stream.

7. The method of claim 6, wherein the optical bandpass filters of the associated sequence are able to pass one sideband and to block the other sideband of the associated optical data stream.

8. The method of claim 6, further comprising:
in each channel, converting an optical data stream having a double-sideband format into the optical data stream having a vestigial sideband format.

9. The method of claim 8, wherein the converting includes passing each optical data stream having a double-sideband format through an optical bandpass filter that passes one sideband and blocks the other sideband of the optical data stream having a double-sideband format.

10. The method of claim 8, wherein the transmitting includes sending first and second ones of the converted optical data streams in adjacent channels to the fiber-optic transmission line in polarization states with substantial parallel components.
